# EUROPÄISCHE PATENTSCHRIFT

(11) **EP 3 721 710 B1**
(45) Veröffentlichungstag und Bekanntmachung des Hinweises auf die Patenterteilung: **22.01.2025**
(21) Anmeldenummer: 20189774.1
(22) Anmeldetag: 06.08.2020
(51) Int. Cl.: A01M 1/02, A01M 1/10

(54) **LEBENDFALLE ZUM LEBENDIGEN FANGEN VON INSEKTEN**
LIVE TRAP FOR THE LIVING TRAPPING OF INSECTS
PIÈGE POUR CAPTURER DES INSECTES VIVANTS

(30) Priorität: 13.05.2020 DE 202020002111 U
(43) Veröffentlichungstag der Anmeldung: 14.10.2020
(73) Patentinhaber: Reckhaus AG, 9056 Gais (CH)
(72) Erfinder: RECKHAUS, Hans-Dietrich, Dr., 9053 Teufen (CH)
(74) Vertreter: Wallinger, Michael

(56) Entgegenhaltungen:
- DE-U1- 202014 008 949
- US-A- 5 170 583
- US-A- 5 452 540
- US-A1- 2005 155 277
- US-A1- 2006 162 235
- US-A1- 2019 200 596
- US-A1- 2019 216 075
- US-A1- 2020 000 079

## Beschreibung

Die vorliegende Erfindung betrifft eine Lebendfalle zum lebendigen Fangen von Insekten, insbesondere von Fruchtfliegen.

Die Erfindung wird im Folgenden im Zusammenhang mit dem lebendigen Fangen von Fruchtfliegen beschrieben. Dies ist jedoch nicht einschränkend zu verstehen. Die Erfindung kann auch zum lebendigen Fangen von anderen Insekten, insbesondere von Fluginsekten, welche eine ähnliche Größe wie Fruchtfliegen haben, beispielsweise von Lebensmittelmotten, verwendet werden.

Fruchtfliegen (Drosophilidae) werden insbesondere von faulenden Früchten und gärenden Getränkeresten angezogen. Ihr Auftreten ist daher in vielen Haushalten, insbesondere in den Räumen, in denen Lebensmittel gelagert werden, ein Problem, sodass ein Bedürfnis an Mitteln zu ihrer Bekämpfung besteht.

Aus diesem Grunde ist eine Vielzahl von Fallen für Fruchtfliegen erhältlich, in denen die Fruchtfliegen jedoch größtenteils getötet werden. So werden die Fruchtfliegen beispielsweise durch Obststücke angelockt und auf einer mit Leim oder Klebstoff bestrichenen Fläche festgehalten, auf welcher sie dann verenden, oder sie werden durch ein Essigbad angelockt, in welchem sie dann ertrinken.

Andererseits besteht aus ethischen und ökologischen Gründen ein Interesse daran, Fruchtfliegen und allgemein Insekten aus den Wohn- und Arbeitsräumen des Menschen fernzuhalten, ohne sie jedoch gleichzeitig zu töten. Dieses Interesse speist sich sowohl aus dem allgemeinen Respekt vor anderen Lebewesen, auch vor kleinen und kleinsten Tieren, als auch aus der Erkenntnis, dass Insekten von hohem Nutzen für die Ökosysteme und damit auch für die Gesellschaft sind, beispielsweise durch die Bestäubung von Nahrungs- und Futterpflanzen.

Es besteht somit insbesondere ein Bedürfnis an sogenannten Lebendfallen für Insekten, d. h. an Fallen, in denen die gefangenen Insekten nicht getötet werden, sondern in der Falle lebend ins Freie getragen und dort freigelassen werden können.

So ist beispielsweise aus der DE 20 2014 008 949 U1 eine Lebendfalle für Fruchtfliegen bekannt mit einem spitzwinkligen, trichterförmigen Fangkörper aus Kunststoff, der in seiner Wandung mit einer Mehrzahl schlitz- oder punktförmiger Öffnungen versehen ist und an seiner Spitze eine Öffnung aufweist, wobei der Fangkörper in einen transparenten Kunststoffbecher einsetzbar ist. Auf den Boden des Kunststoffbechers wird ein insbesondere aus Obststücken bestehender Köder gelegt, dessen Duft durch die Trichteröffnungen nach außen gelangt und die Fruchtfliegen anlockt, bis diese durch die Öffnung an der Spitze des Fangkörpers in den Innenraum des Bechers schlüpfen und dort lebend gefangen sind. Zum Befreien der gefangenen Fruchtfliegen wird die Falle ins Freie gebracht, der Fangkörper angehoben und die gefangenen Fliegen lebend entlassen.

Der vorliegenden Erfindung liegt die Aufgabe zugrunde, eine zuverlässige Lebendfalle für Insekten, insbesondere für Fruchtfliegen, bereitzustellen, die eine gute Lockwirkung auf die zu fangenden Insekten ausübt und dabei leicht zu handhaben und zu reinigen ist.

Diese Aufgabe wird gelöst durch eine Lebendfalle zum lebendigen Fangen von Insekten, insbesondere von Fruchtfliegen, gemäß Anspruch 1. Weitere vorteilhafte Ausführungen der Erfindung sind in den Unteransprüchen enthalten.

Die Erfindung sieht eine Lebendfalle zum lebendigen Fangen von Insekten, insbesondere von Fruchtfliegen, vor, welche einen Fangbehälter, einen Sockel und einen trichterförmigen Einsatz aufweist.

Der trichterförmige Einsatz weist eine Trichtereingangsöffnung, eine der Trichtereingangsöffnung bezüglich einer Längsachse des trichterförmigen Einsatzes gegenüberliegende Trichterspitze, eine die Trichtereingangsöffnung mit der Trichterspitze verbindende und sich von der Trichtereingangsöffnung zur Trichterspitze hin verjüngende Trichterwand mit einer Mehrzahl von Schlitzen und eine an der Trichterspitze angeordnete Trichterausgangsöffnung auf.

Dabei ist die Trichterausgangsöffnung vorzugsweise so groß bemessen, dass die zu fangenden Insekten durch sie hindurchschlüpfen können, und die Schlitze in der Trichterwand sind vorzugsweise so schmal, dass die zu fangenden Insekten nicht durch sie hindurchschlüpfen können.

Der trichterförmige Einsatz ist derart in eine in der Gebrauchsstellung nach oben weisende, obere Öffnung des Fangbehälters eingesetzt, dass in der Gebrauchsstellung die Trichtereingangsöffnung nach oben und die Trichterspitze nach unten weist.

Der Fangbehälter weist weiterhin eine äußere Umfangswand auf. In der Gebrauchsstellung steht der Fangbehälter auf oder in dem Sockel.

Weiterhin weist die erfindungsgemäße Lebendfalle einen zumindest teilweise in dem Fangbehälter und/oder zumindest teilweise in dem Sockel angeordneten Lockmittelbehälter mit einer Lockflüssigkeit und einem Docht auf.

Als Lockflüssigkeit bietet sich dabei insbesondere Apfelessig an. Dieser übt auf Fruchtfliegen eine besonders starke Lockwirkung aus, welche die Lockwirkung beispielsweise von Obststücken deutlich übersteigt. Zudem handelt es sich bei Apfelessig um einen natürlichen Wirkstoff. Ferner lässt sich die Fruchtfliegenfalle bei der Verwendung eines solchen flüssigen Lockmittels leichter reinigen, als wenn beispielsweise Obststücke eingelegt werden, die trocknen und an den Wänden der Fruchtfliegenfalle kleben.

Anstatt beispielsweise eine offene, mit der Lockflüssigkeit gefüllte Schale vorzusehen, aus welcher die Lockflüssigkeit relativ schnell und unkontrolliert verdunsten kann, verwendet die Erfindung einen Lockmittelbehälter, welcher mit einem Docht versehen ist. Der Docht fördert durch Kapillarwirkung stets eine bestimmte Menge Lockflüssigkeit pro Zeiteinheit aus dem Lockmittelbehälter und lässt diese verdunsten.

Auf diese Weise lässt sich eine gleichmäßige, weder zu langsame noch zu schnelle Abgabe der Lockflüssigkeit aus dem Lockmittelbehälter in die Fruchtfliegenfalle sowie in die Umgebungsluft über einen längeren Zeitraum sicherstellen. Beispielsweise ist die Fruchtfliegenfalle bei einem Vorrat von 40 ml Lockflüssigkeit in dem Lockmittelbehälter über ca. 6 bis 8 Wochen hinweg wirksam.

Außerdem kann der Lockmittelbehälter, sobald die Lockflüssigkeit darin verbraucht ist, als Ganzes ausgetauscht werden, ohne Verschmutzungen in dem Fangbehälter zu verursachen.

Im Gebrauch der erfindungsgemäßen Fruchtfliegenfalle verströmt die aus dem Lockmittelbehälter verdunstende Lockflüssigkeit einen Duft, welcher durch die Schlitze in der Trichterwand und die Trichtereingangsöffnung nach oben strömt und die Fruchtfliegen anlockt. Diese fliegen oder krabbeln nun in den trichterförmigen Einsatz hinein, schlüpfen durch die Trichterausgangsöffnung an dessen unterem Ende hindurch in den Fangbehälter und werden dort weiterhin durch den Duft der Lockflüssigkeit angezogen.

Falls die Fruchtfliegen überhaupt aus der Falle entkommen wollen, orientieren sie sich nach oben hin und werden von dem durch die Schlitze in der Trichterwand gebildeten Lichtmuster angezogen. Da sie jedoch durch die Schlitze nicht entkommen können, sammeln sie sich in dem sich nach oben hin verjüngenden Raum zwischen der Trichterwand und der äußeren Umfangswand des Fangbehälters. Die Wahrscheinlichkeit, dass einzelne Fruchtfliegen wieder durch die Trichterausgangsöffnung nach oben entkommen, ist relativ gering.

Der Benutzer kann die Fruchtfliegenfalle dann nach einiger Zeit ins Freie tragen, den trichterförmigen Einsatz entnehmen und die gefangenen Fruchtfliegen lebend ins Freie entlassen.

Auf diese Weise wird die Aufgabe der Erfindung, eine zuverlässige, leicht zu handhabende und zu reinigende Lebendfalle für Insekten mit guter Lockwirkung bereitzustellen, gelöst.

Erfindungsgemäß weist die äußere Umfangswand des Fangbehälters weiterhin eine in der Gebrauchsstellung nach unten weisende, untere Öffnung auf.

Die untere Öffnung in dem Fangbehälter erlaubt es, den Fangbehälter in einfacher Weise ganz oder teilweise über den Lockmittelbehälter zu stülpen bzw. den Fangbehälter von dem Lockmittelbehälter abzunehmen, ohne dass der Benutzer dabei den Lockmittelbehälter berühren muss und dabei mit der möglicherweise scharfen oder sogar gesundheitsschädlichen Lockflüssigkeit in Berührung kommt. Auch kann auf diese Weise der Fangbehälter mit den darin gefangenen Fruchtfliegen von dem Lockmittelbehälter abgenommen und ins Freie getragen werden, um die gefangenen Fruchtfliegen freizulassen, ohne dabei den Lockmittelbehälter mitnehmen zu müssen. Dies vermeidet die Gefahr, dass beim Hinaustragen der Fruchtfliegenfalle oder beim Freilassen der Fruchtfliegen Lockflüssigkeit verschüttet wird oder der gesamte Lockmittelbehälter herunterfällt.

In einer bevorzugten Ausführung der Erfindung ist der Lockmittelbehälter teilweise in dem Fangbehälter und teilweise in dem Sockel angeordnet.

Dabei erlaubt die untere, nach unten weisende Öffnung in dem Fangbehälter, dass der Lockmittelbehälter nach unten hin aus dem Fangbehälter hinausragt und nur noch teilweise in dem Fangbehälter, teilweise aber auch in dem Sockel, auf welchem der Fangbehälter steht, angeordnet ist.

Außerdem führt diese Anordnung des Lockmittelbehälters zu einem besonders tiefen Schwerpunkt des Lockmittelbehälters und damit zu einem sicheren Stand der gesamten Fruchtfliegenfalle.

Schließlich ergibt sich auf diese Weise eine optisch besonders ansprechende Fruchtfliegenfalle, da der Lockmittelbehälter selbst von dem Sockel teilweise verdeckt wird und damit von außen nur teilweise sichtbar ist, insbesondere dann, wenn der Sockel aus einem intransparenten Material hergestellt ist.

In einer weiteren bevorzugten Ausführung der Erfindung weist der Sockel eine Vertiefung und in der Vertiefung einen Zwischenboden auf, wobei der Lockmittelbehälter auf dem Boden der Vertiefung und der Fangbehälter auf dem Zwischenboden steht.

Auf diese Weise wird bewirkt, dass die Unterseite des Lockmittelbehälters tiefer zu liegen kommt als die Unterseite des Fangbehälters. Dadurch kann insbesondere die Anordnung gemäß der zuletzt genannten Variante realisiert werden, bei der der Lockmittelbehälter teilweise in dem Fangbehälter und teilweise in dem Sockel angeordnet ist. Falls der Abstand zwischen dem Boden der Vertiefung und dem Zwischenboden in dem Sockel größer als die Höhe des Lockmittelbehälters ist, kann der Lockmittelbehälter aber auch gänzlich unterhalb des Fangbehälters in dem Sockel angeordnet und damit von außen gar nicht sichtbar sein.

In einer weiteren bevorzugten Ausführung der Erfindung ist die äußere Umfangswand des Fangbehälters im Wesentlichen zylindrisch oder konisch, und eine Längsachse des Fangbehälters ist in der Gebrauchsstellung im Wesentlichen vertikal angeordnet.

Hierdurch ergibt sich eine besonders einfache und optisch ansprechende Gestaltung der Fruchtfliegenfalle. Außerdem ist der Fangbehälter durch eine zylindrische oder konische Form relativ einfach durch Spritzgießen aus Kunststoff herstellbar. Durch die im Wesentlichen vertikal angeordnete Längsachse des Fangbehälters ist sichergestellt, dass die verdunstende Lockflüssigkeit auf direktem Wege nach oben durch den trichterförmigen Einsatz in die Umgebungsluft entweichen kann.

In einer weiteren bevorzugten Ausführung der Erfindung beträgt in der Gebrauchsstellung der Flächeninhalt der Trichtereingangsöffnung im Wesentlichen wenigstens 50 %, vorzugsweise wenigstens 70 %, weiter vorzugsweise wenigstens 80 % des Flächeninhalts des größten horizontalen Querschnitts der Innenseite der äußeren Umfangswand des Fangbehälters, welcher innerhalb der vertikalen Ausdehnung des Fangbehälters auftritt.

Die Trichtereingangsöffnung ist somit relativ groß im Vergleich zum Querschnitt des Fangbehälters, wodurch sowohl die Menge der durch den trichterförmigen Einsatz entweichenden Lockflüssigkeit als auch die Zahl der in die Fruchtfliegenfalle gelangenden Fruchtfliegen vergrößert wird.

In einer weiteren bevorzugten Ausführung der Erfindung ist der trichterförmige Einsatz mit dem Fangbehälter, insbesondere an einem in der Gebrauchsstellung nach oben weisenden Rand der äußeren Umfangsfläche des Fangbehälters, durch eine Steckverbindung, Rastverbindung, Schraubverbindung oder Bajonettverbindung verbunden.

Eine solche kraft- oder formschlüssige Verbindung zwischen dem trichterförmigen Einsatz und dem Fangbehälter führt zu einer erhöhten Stabilität der gesamten Fruchtfliegenfalle. Insbesondere wird dadurch verhindert, dass der trichterförmige Einsatz versehentlich aus dem Fangbehälter herausfällt, wenn dieser beispielsweise umkippt, und dadurch die gefangenen Fruchtfliegen wieder in den Wohn- oder Arbeitsraum entweichen können.

Da der Fangbehälter erfindungsgemäß auch eine untere Öffnung aufweist, muss die Verbindung zwischen dem trichterförmigen Einsatz und dem Fangbehälter im Normalfall gar nicht mehr gelöst werden, da erfindungsgemäß sowohl das Freilassen der gefangenen Fruchtfliegen als auch der Austausch des Lockmittelbehälters von unten durch die untere Öffnung erfolgen können.

In einer weiteren bevorzugten Ausführung der Erfindung ist der Sockel mit dem Fangbehälter, insbesondere an einem in der Gebrauchsstellung nach unten weisenden Rand der äußeren Umfangsfläche des Fangbehälters, durch eine Steckverbindung, Rastverbindung, Schraubverbindung oder Bajonettverbindung verbunden.

Auch eine solche kraft- oder formschlüssige Verbindung des Sockels mit dem Fangbehälter führt zu einer erhöhten Stabilität der gesamten Fruchtfliegenfalle. Vor allem aber kann auf diese Weise der Fangbehälter einfach vom Sockel getrennt werden, um die gefangenen Fruchtfliegen freizulassen oder den Lockmittelbehälter auszutauschen.

In einer bevorzugten gemeinsamen Variante der beiden zuletzt genannten Ausführungen sind die Verbindung des trichterförmigen Einsatzes mit dem Fangbehälter und die Verbindung des Sockels mit dem Fangbehälter identisch ausgebildet.

Dies erleichtert die Handhabung der Fruchtfliegenfalle durch den Benutzer, da dieser beim Schließen und beim Öffnen der beiden Verbindungen dieselben Handgriffe anwenden kann. Weiterhin erleichtert es die Herstellung der beteiligten Bauteile (trichterförmiger Einsatz, Fangbehälter und Sockel), da die entsprechenden Verbindungsvorrichtungen wie Gewinde oder Rastvorsprünge nur einmal entwickelt und dann repliziert werden können.

In einer weiteren bevorzugten Ausführung der Erfindung ist der Fangbehälter bezüglich einer in der Gebrauchsstellung horizontal verlaufenden Achse drehsymmetrisch ausgebildet, d. h. er geht durch eine Drehung um diese Achse in sich selbst über. Vorzugsweise verläuft diese Achse durch eine Mittelebene des Fangbehälters zwischen dessen oberem Rand und dessen unterem Rand. Insbesondere kann der Fangbehälter dabei zwei identisch, d. h. deckungsgleich ausgebildete Verbindungen mit dem trichterförmigen Einsatz bzw. mit dem Sockel gemäß der zuletzt beschriebenen Variante aufweisen.

Auch dies erleichtert die Handhabung durch den Benutzer, da dieser vor dem Verbinden des Fangbehälters mit dem trichterförmigen Einsatz bzw. mit dem Sockel nicht darauf achten muss, wie der Fangbehälter orientiert ist, sondern den Fangbehälter dabei wegen dessen Drehsymmetrie in zwei zueinander um 180 Grad gedrehten Orientierungen verwenden kann.

In einer weiteren bevorzugten Ausführung der Erfindung sind der Fangbehälter, der trichterförmige Einsatz und der Sockel nicht alle aus dem gleichen Material hergestellt. Insbesondere können der Fangbehälter und der trichterförmige Einsatz aus Kunststoff und der Sockel aus Karton hergestellt sein.

Durch den Einsatz von zumindest teilweise unterschiedlichen Materialien für den Fangbehälter, den trichterförmigen Einsatz und den Sockel kann die Optik der Fruchtfliegenfalle gezielt variiert werden. Vorzugsweise kann durch die Herstellung des Sockels aus Karton der Sockel teilweise undurchsichtig gestaltet werden, um den Lockmittelbehälter teilweise zu verdecken, während der Fangbehälter und der trichterförmige Einsatz aus transparentem Kunststoff hergestellt sein können, damit die Menge der gefangenen Fruchtfliegen von außen kontrolliert werden kann.

In einer weiteren bevorzugten Ausführung der Erfindung ist der Sockel aus einem einzigen, zugeschnittenen und gefalteten Blatt Karton hergestellt und hat die Form einer Schachtel.

Dies stellt eine besonders einfache und kostengünstige Möglichkeit zur Herstellung des Sockels dar. Eine etwaige Öffnung in dem Sockel für den Lockmittelbehälter und/oder für den Fangbehälter kann dabei gleich beim Zuschneiden des Kartonblattes vorgesehen werden, indem ein entsprechendes Loch ausgeschnitten oder ausgestanzt wird. Ebenso kann durch entsprechendes Zuschneiden und Falten des Kartonblattes ein etwaiger Zwischenboden, auf den der Fangbehälter gestellt werden kann, vorgesehen werden. Auch eine einfache Verbindung zwischen dem Fangbehälter und dem Sockel, wie insbesondere eine Steckverbindung oder eine Bajonettverbindung, kann mit einem auf diese Weise hergestellten Sockel realisiert werden.

Weitere Vorteile, Merkmale und Anwendungsmöglichkeiten der vorliegenden Erfindung ergeben sich aus der nachfolgenden Beschreibung in Zusammenhang mit den Figuren. Dabei zeigen:
- Fig. 1a: einen trichterförmigen Einsatz einer erfindungsgemäßen Fruchtfliegenfalle in einer perspektivischen Darstellung von schräg unten;
- Fig. 1b: einen trichterförmigen Einsatz der erfindungsgemäßen Fruchtfliegenfalle in einer perspektivischen Darstellung von schräg oben;
- Fig. 2: einen Fangbehälter der erfindungsgemäßen Fruchtfliegenfalle in einer perspektivischen Darstellung von schräg oben;
- Fig. 3: einen Sockel und einen Lockmittelbehälter der erfindungsgemäßen Fruchtfliegenfalle in einer perspektivischen Darstellung von schräg oben;
- Fig. 4: den Sockel der erfindungsgemäßen Fruchtfliegenfalle im entfalteten Zustand;
- Fig. 5: eine vollständig montierte erfindungsgemäße Fruchtfliegenfalle in einer teilweise perspektivischen Seitenansicht.

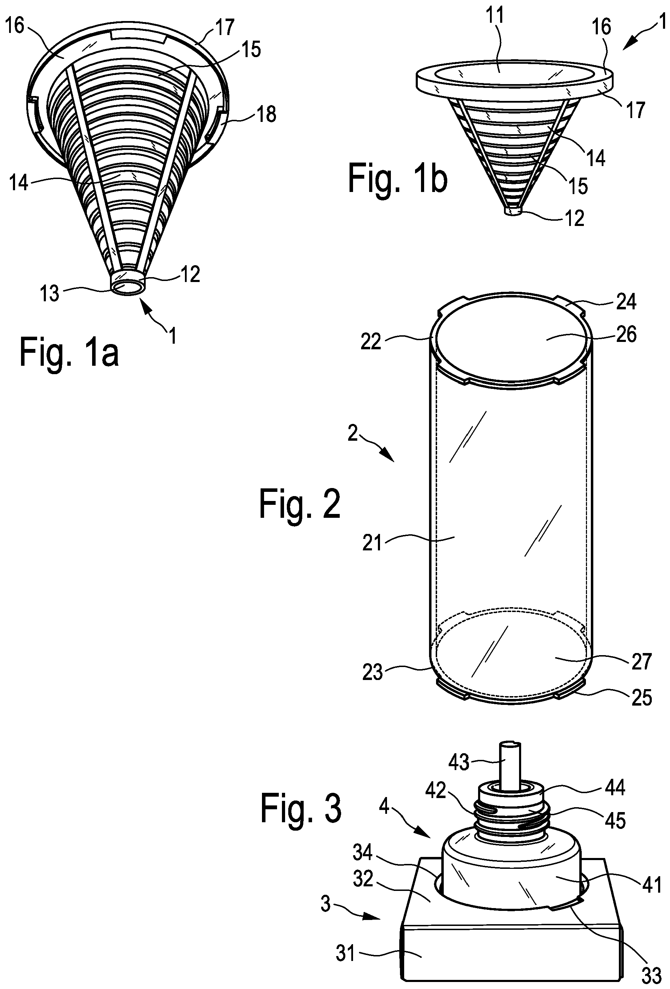

Die Fig. 1a, 1b, 2 und 3 zeigen die Komponenten der erfindungsgemäßen Fruchtfliegenfalle, nämlich den trichterförmigen Einsatz 1, den Fangbehälter 2, den Sockel 3 und den Lockmittelbehälter 4, wobei die Fig. 1b, 2 und 3 gemeinsam eine Explosionszeichnung der Fruchtfliegenfalle darstellen.

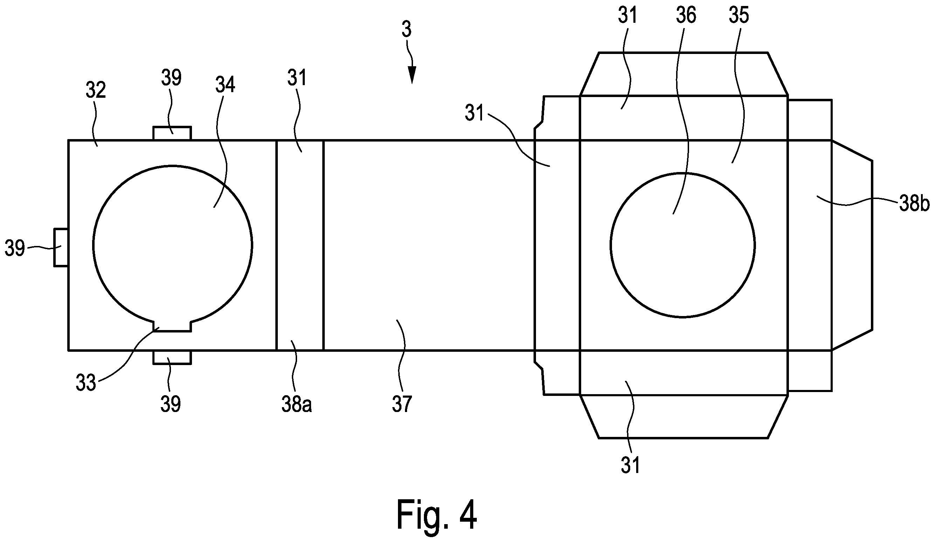

Alle Figuren außer Fig. 4 sind in der Gebrauchsstellung der Fruchtfliegenfalle dargestellt. Auf diese Gebrauchsstellung beziehen sich im Folgenden auch Bezeichnungen wie "oben", "unten", "vertikal", "horizontal" usw.

Der trichterförmige Einsatz 1 (Fig. 1a und 1b) weist eine kegelförmige Trichterwand 14 auf, welche an ihrer Oberseite eine Trichtereingangsöffnung 11 umgibt und sich in Richtung der Trichterspitze 12 an ihrer Unterseite verjüngt. In der Trichterspitze 12 ist eine vertikal gerichtete Trichterausgangsöffnung 13 angeordnet, welche gerade so groß ist, dass eine Fruchtfliege durch sie hindurchschlüpfen kann.

An die Trichtereingangsöffnung 11 schließt nach radial außen ein ringförmiger, horizontal angeordneter Trichterflansch 16 mit seinem inneren Rand an. An dem äußeren Rand des Trichterflanschs 16 ist eine nach unten gerichtete Schürze 17 von geringer vertikaler Ausdehnung angeordnet. Über den Umfang des Trichterflanschs 16 verteilt sind mehrere (in dieser Ausführung vier) Rastaufnahmen 18 angeordnet, welche weiter unten noch näher beschrieben werden.

Die Trichterwand 14 wird von einer Vielzahl von Schlitzen 15 durchbrochen. Jeder Schlitz 15 hat eine so geringe Breite, dass eine Fruchtfliege nicht durch ihn hindurchschlüpfen kann. Die Schlitze 15 sind horizontal in der konischen Trichterwand 14 angeordnet und damit jeweils kreisbogenförmig. Insbesondere sind die Schlitze 15 in konzentrischen, horizontalen Ringen in der Trichterwand 14 angeordnet. Jeder Ring weist in Umfangsrichtung vier einzelne, durch vertikale Stege voneinander getrennte Schlitze 15 auf, wobei die Stege die Stabilität des trichterförmigen Einsatzes 1 erhöhen.

Der trichterförmige Einsatz 1 ist in dieser Ausführung aus einem transparenten Kunststoff hergestellt, vorzugsweise aus PET und weiter vorzugsweise aus PET-Recyclat. Selbstverständlich können auch andere Werkstoffe als Kunststoff wie Glas, Metall, Keramik oder Karton für den trichterförmigen Einsatz 1 verwendet werden.

Der Fangbehälter 2 (Fig. 2) weist eine zylindrische, senkrecht ausgerichtete äußere Umfangswand 21 mit einem oberen Rand 22 und einem unteren Rand 23 auf. Die obere und die untere Stirnseite der äußeren Umfangswand 21 sind offen und bilden eine obere Öffnung 26 bzw. eine untere Öffnung 27 des Fangbehälters 2.

Über den Umfang des oberen Randes 22 und des unteren Randes 23 des Fangbehälters 2 gleichmäßig verteilt stehen von dem oberen Rand 22 bzw. dem unteren Rand 23 mehrere (in dieser Ausführung vier) obere Rastvorsprünge 24 bzw. untere Rastvorsprünge 25 nach radial außen hervor.

Die oberen Rastvorsprünge 24 bilden das Gegenstück zu den Rastaufnahmen 18 des trichterförmigen Einsatzes 1 und können mit diesen in einer Art Bajonettverschluss verbunden werden. Dazu wird der trichterförmige Einsatz 1 auf die obere Öffnung 26 des Fangbehälters 2 aufgesetzt, wobei die Rastaufnahmen 18 und die Rastvorsprünge 24 zunächst verschiedene Winkelstellungen haben. Der Trichterflansch 16 und die Schürze 17 umschließen dabei den oberen Rand 22 des Fangbehälters 2 von oben bzw. von radial außen.

Jede Rastaufnahme 18 ist als schlitzförmige Öffnung ausgebildet, welche in Umfangsrichtung ein offenes Ende und ein geschlossenes Ende, welches einen Anschlag bildet, aufweist und sich in Umfangsrichtung von dem offenen zu dem geschlossenen Ende hin leicht verjüngt.

Wird nun der trichterförmige Vorsprung 1 in einer bestimmten Richtung, vorzugsweise im Uhrzeigersinn, um seine Längsachse gedreht, wobei er durch den Trichterflansch 16 und die Schürze 17 auf dem oberen Rand 22 des Fangbehälters 2 geführt wird, so wird jeder obere Rastvorsprung 24 in eine bestimmte Rastaufnahme 18 eingeführt, bis er an deren Anschlag in Umfangsrichtung anschlägt, und wird gleichzeitig durch den sich verjüngenden Schlitz in der Rastaufnahme 18 festgeklemmt. Auf diese Weise wird ein einfacher Bajonettverschluss zwischen dem trichterförmigen Einsatz 1 und dem Fangbehälter 2 realisiert.

Der obere Rand 22 mit den oberen Rastvorsprüngen 24 und der untere Rand 23 mit den unteren Rastvorsprüngen 25 des Fangbehälters 2 sind identisch gestaltet. Daher kann der Fangbehälter 2 auch um 180 Grad um eine horizontale Achse, welche durch seine Mittelebene verläuft, gedreht verwendet werden, sodass dann die unteren Rastvorsprünge 25 in die Rastaufnahmen 18 des trichterförmigen Einsatzes 1 einrasten.

Der Fangbehälter 2 ist in dieser Ausführung aus dem gleichen Material hergestellt wie der trichterförmige Einsatz 1, wobei selbstverständlich auch die für den trichterförmigen Einsatz 1 alternativ genannten Werkstoffe infrage kommen.

Der Sockel 3 (Fig. 3 und 4) hat die Grundform eines niedrigen Quaders mit einer quadratischen Grundfläche, wobei die Seitenlänge der Grundfläche in dieser Ausführung etwa dreieinhalb mal so groß ist wie Höhe des Quaders. Der Sockel 3 weist somit vier äußere Seitenflächen 31, eine obere Seitenfläche 32 und eine untere Seitenfläche 37 auf. Der Sockel 3 ist aus einem einzigen zugeschnittenen und gestanzten Kartonblatt hergestellt, welches gefaltet, geklebt und zusammengesteckt ist, um seine dreidimensionale Form zu erreichen (vgl. die Beschreibung zu Fig. 4 unten).

Die obere Seitenfläche 32 weist eine kreisrunde obere Öffnung 34 auf, welche einen etwas größeren Durchmesser als der untere Rand 23 des Fangbehälters 2 hat. Die durch die obere Öffnung 34 freigegebene Vertiefung in dem Sockel 3 ist bis zu dessen unterer Seitenfläche 37 durchgehend offen. Weiterhin weist die obere Seitenfläche 32 eine radial nach außen gerichtete Rastöffnung 33 auf, welche die gleiche Form hat und etwas größer ist als die unteren Rastvorsprünge 25 des Fangbehälters 2.

In der Vertiefung zwischen der oberen Seitenfläche 32 und der unteren Seitenfläche 37 weist der Sockel 3 einen Zwischenboden 35 auf, welcher zu der oberen Seitenfläche 32 und der unteren Seitenfläche 37 parallel verläuft und in geringem Abstand unterhalb der oberen Seitenfläche 32 angeordnet ist. Der Zwischenboden 35 weist eine kreisrunde Öffnung 36 auf, welche zu der oberen Öffnung 34 des Sockels 3 konzentrisch ist, aber einen etwas kleineren Durchmesser als der untere Rand 23 des Fangbehälters 2 hat.

In Fig. 4 ist der Sockel 3 noch einmal in einer entfalteten Stellung als flaches Kartonblatt dargestellt, wobei in Fig. 4 die Innenseite des Sockels sichtbar ist.

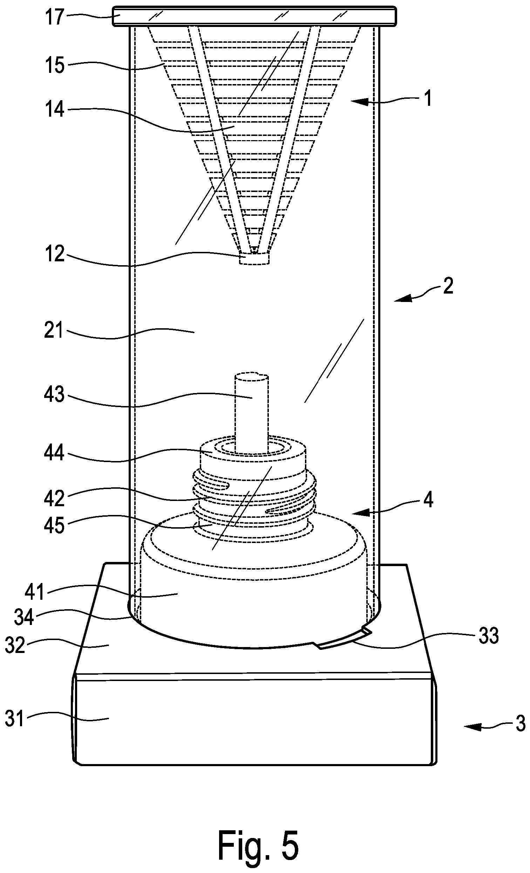

In Fig. 4 weist die Rastöffnung 33 in Richtung des Mittelpunkts einer Längsseite der oberen Seitenfläche 32 und nicht, wie in den Fig. 3 und 5, in Richtung einer Ecke der oberen Seitenfläche 32. Die umfangsmäßige Lage der Rastöffnung 33 auf dem Rand der oberen Öffnung 34 in der oberen Seitenfläche 32 ist jedoch für die Verbindung zwischen dem Fangbehälter 2 und dem Sockel 3 offensichtlich unerheblich und kann daher beliebig gewählt werden.

Das in der in Fig. 4 dargestellten Form hergestellte, d. h. zugeschnittene und gestanzte Kartonblatt wird nun entlang der in Fig. 4 waagrechten Richtung um eine imaginäre Achse herum nach innen "eingerollt". Dabei wird das Kartonblatt an allen eingezeichneten senkrechten Linien, welche die Übergänge von jeweils einem Wandabschnitt des Sockels 3 zu einem benachbarten Wandabschnitt darstellen, um 90 Grad nach innen gefaltet.

Das Kartonblatt wird zunächst so weit eingerollt, dass die Klebeflächen 38a und 38b aufeinander zu liegen kommen (die Klebefläche 38b befindet sich gegenüber der in Fig. 4 sichtbaren Seite auf der Rückseite des Kartonblattes). In diesem Zustand werden die Klebeflächen 38a und 38b miteinander verklebt.

Nun wird das Kartonblatt weiter in der genannten Richtung eingerollt, sodass die obere Seitenfläche 32 den Zwischenboden 35 mit einem geringfügigen Abstand dazwischen bedeckt.

Zuletzt (oder auch schon vor dem Einrollen) werden die beiden äußeren Seitenflächen 31, die oben und unten an den Zwischenboden 35 angrenzen, ebenfalls um 90 Grad gefaltet. Schließlich werden alle Stecklaschen 39 in hierfür vorgesehene Schlitze (nicht dargestellt) eingesteckt und so der Sockel 3 in seiner Schachtelform fixiert.

Auf diese Weise ergibt sich der eingangs beschriebene Sockel 3 in Form einer Schachtel, genauer in Form eines niedrigen Quaders mit quadratischer Grundfläche, mit den beschriebenen Öffnungen.

Für den Gebrauch der Fruchtfliegenfalle wird der Lockmittelbehälter 4 in die Vertiefung im Sockel 3 auf dessen untere Seitenfläche 37 gestellt. Danach werden der Fangbehälter 2, der mit dem trichterförmigen Einsatz 1 wie oben beschrieben verbunden wurde, auf den Sockel 3 gestellt und die unteren Rastvorsprünge 25 des Fangbehälters 2 unter vorsichtigem Drehen des Fangbehälters 2 durch die Rastöffnung 33 nacheinander in die obere Seitenfläche 32 des Sockels 3 eingeführt, bis der Fangbehälter 2 auf dem Zwischenboden 35 steht. Sodann wird der Fangbehälter 2 um einen bestimmten Winkel weitergedreht, sodass kein unterer Rastvorsprung 25 in Deckung mit der Rastöffnung 33 des Sockels 3 ist. Damit ist der Fangbehälter 2 zwischen der oberen Seitenfläche 32 und dem Zwischenboden 35 des Sockels 3 fixiert und somit gegen Herausziehen aus dem Sockel 3 gesichert.

Der Lockmittelbehälter 4 weist ein im Wesentlichen zylindrisches, mit einer Lockflüssigkeit wie Apfelessig gefülltes Lockmittelreservoir 41 auf, an das sich nach oben hin ein verjüngter Hals 45 mit einem Außengewinde 42 anschließt. Aus dem Lockmittelreservoir 41 erstreckt sich durch den Hals 45 nach oben ein Docht 43, welcher gegenüber dem Hals 45 durch eine Dichtung 44 abgedichtet ist und nach oben über den Hals 45 hinaussteht. Der Docht 43 besteht überwiegend aus Naturfasern. Durch den Docht 43 wird stets eine gleichbleibende Menge von Lockflüssigkeit aus dem Lockmittelreservoir 41 gefördert und in die Umgebung verdunstet. Über den Docht 43 kann eine (nicht dargestellte) Kappe auf das Außengewinde 42 des Halses 45 aufgeschraubt werden, um den Docht 43 gegenüber der Umgebung abzudichten und so das Verdunsten von Lockflüssigkeit während des Nichtgebrauchs der Fruchtfliegenfalle zu verhindern.

Der Durchmesser des Lockmittelreservoirs 41 und damit der größte Durchmesser des Lockmittelbehälters 4 ist etwas geringer als der Innendurchmesser der äußeren Umfangswand 21 des Fangbehälters 2, sodass der Fangbehälter 2 lose auf den Lockmittelbehälter 4 gestellt werden kann. Der Spalt zwischen der Außenseite des Lockmittelbehälters 4 und der Innenseite der äußeren Umfangswand 21 des Fangbehälters 2 ist dabei so klein bemessen, dass Fruchtfliegen nicht durch diesen Spalt hindurchschlüpfen können.

Auch der Lockmittelbehälter 4 kann aus PET-Recyclat oder aus einem Kunststoff mit einem hohen Anteil an PET-Recyclat hergestellt sein.

Nach Ausführung der oben genannten Schritte ist die Fruchtfliegenfalle komplett montiert, wobei der Lockmittelbehälter 4 teilweise in der Vertiefung des Sockels 3 und teilweise in dem Fangbehälter 2 angeordnet ist.

Durch die in die Umgebungsluft verdunstete Lockflüssigkeit werden nun die Fruchtfliegen angelockt, krabbeln durch die Trichtereingangsöffnung 11 in den trichterförmigen Einsatz 1 hinein und schlüpfen durch die Trichterausgangsöffnung 13 an der Trichterspitze 12 in den Fangbehälter 2 hinein, wo sie gefangen werden.

Sobald genügend Fruchtfliegen gefangen sind, kann der Benutzer entweder die gesamte Fruchtfliegenfalle mit dem Sockel 3 und dem Lockmittelbehälter 4 ins Freie tragen, den Fangbehälter 2 in umgekehrter Weise wie oben beschrieben von dem Sockel 3 - oder auch den trichterförmigen Einsatz 1 von dem Fangbehälter 2 - lösen und die Fruchtfliegen freilassen.

Der Benutzer kann jedoch auch zuerst den Fangbehälter 2 mit dem trichterförmigen Einsatz 1 von dem Sockel 3 lösen und den Fangbehälter 2 ins Freie tragen. Da Fruchtfliegen sich im Allgemeinen nach oben orientieren, ist es unwahrscheinlich, dass sie in der kurzen Zeit, in der der Fangbehälter 2 dann unten offen ist, dort wieder entweichen.

Das Freilassen der gefangenen Fruchtfliegen kann, je nach Stärke des Fruchtfliegenbefalls, beispielsweise täglich erfolgen.

Fig. 5 zeigt eine erfindungsgemäße Fruchtfliegenfalle noch einmal in ihrem komplett montierten und gebrauchsfertigen Zustand.

**Bezugszeichenliste**

| | | | |
|---|---|---|---|
| 1 | trichterförmiger Einsatz | 3 | Sockel |
| 11 | Trichtereingangsöffnung | 31 | äußere Seitenfläche |
| 12 | Trichterspitze | 32 | obere Seitenfläche |
| 13 | Trichterausgangsöffnung | 33 | Rastöffnung |
| 14 | Trichterwand | 34 | obere Öffnung |
| 15 | Schlitz | 35 | Zwischenboden |
| 16 | Trichterflansch | 36 | Öffnung im Zwischenboden |
| 17 | Schürze | 37 | untere Seitenfläche |
| 18 | Rastaufnahme | 38a,b | Klebeflächen |
| | | 39 | Stecklasche |
| 2 | Fangbehälter | | |
| 21 | äußere Umfangswand | 4 | Lockmittelbehälter |
| 22 | oberer Rand | 41 | Lockmittelreservoir |
| 23 | unterer Rand | 42 | Außengewinde |
| 24 | oberer Rastvorsprung | 43 | Docht |
| 25 | unterer Rastvorsprung | 44 | Dichtung |
| 26 | obere Öffnung | 45 | Hals |
| 27 | untere Öffnung | | |

## Patentansprüche

1. Lebendfalle zum lebendigen Fangen von Insekten, insbesondere von Fruchtfliegen, aufweisend einen Fangbehälter (2), einen Sockel (3) und einen trichterförmigen Einsatz (1) mit einer Trichtereingangsöffnung (11), einer der Trichtereingangsöffnung (11) bezüglich einer Längsachse des trichterförmigen Einsatzes (1) gegenüberliegenden Trichterspitze (12), einer die Trichtereingangsöffnung (11) mit der Trichterspitze (12) verbindenden und sich von der Trichtereingangsöffnung (11) zur Trichterspitze (12) hin verjüngenden Trichterwand (14) mit einer Mehrzahl von Schlitzen (15) und einer an der Trichterspitze (12) angeordneten Trichterausgangsöffnung (13), wobei der trichterförmige Einsatz (1) derart in eine in der Gebrauchsstellung nach oben weisende, obere Öffnung (26) des Fangbehälters (2) eingesetzt ist, dass in der Gebrauchsstellung die Trichtereingangsöffnung (11) nach oben und die Trichterspitze (12) nach unten weist, wobei der Fangbehälter (2) eine äußere Umfangswand (21) aufweist, wobei der Fangbehälter (2) in der Gebrauchsstellung auf oder in dem Sockel (3) steht und wobei die Lebendfalle einen zumindest teilweise in dem Fangbehälter (2) und/oder zumindest teilweise in dem Sockel (3) angeordneten Lockmittelbehälter (4) mit einer Lockflüssigkeit und einem Docht (43) aufweist,
**dadurch gekennzeichnet, dass**
die äußere Umfangswand (21) des Fangbehälters (2) weiterhin eine in der Gebrauchsstellung nach unten weisende, untere Öffnung (27) aufweist, wobei sowohl ein Freilassen der gefangenen Insekten als auch ein Austausch des Lockmittelbehälters (4) von unten durch die untere Öffnung (27) erfolgen können.

2. Lebendfalle gemäß Anspruch 1, **dadurch gekennzeichnet, dass** der Lockmittelbehälter (4) teilweise in dem Fangbehälter (2) und teilweise in dem Sockel (3) angeordnet ist.

3. Lebendfalle gemäß einem der vorhergehenden Ansprüche , **dadurch gekennzeichnet, dass** der Sockel (3) eine Vertiefung und in der Vertiefung einen Zwischenboden aufweist und dass der Lockmittelbehälter (4) auf dem Boden der Vertiefung und der Fangbehälter (2) auf dem Zwischenboden steht.

4. Lebendfalle gemäß einem der vorhergehenden Ansprüche, **dadurch gekennzeichnet, dass** die äußere Umfangswand (21) des Fangbehälters (2) im Wesentlichen zylindrisch oder konisch ist und eine Längsachse des Fangbehälters (2) in der Gebrauchsstellung im Wesentlichen vertikal angeordnet ist.

5. Lebendfalle gemäß einem der vorhergehenden Ansprüche, **dadurch gekennzeichnet, dass** in der Gebrauchsstellung der Flächeninhalt der Trichtereingangsöffnung (11) im Wesentlichen wenigstens 50 %, vorzugsweise wenigstens 70 %, weiter vorzugsweise wenigstens 80 % des Flächeninhalts des größten horizontalen Querschnitts der Innenseite der äußeren Umfangswand (21) des Fangbehälters (2), welcher innerhalb der vertikalen Ausdehnung des Fangbehälters (2) auftritt, beträgt.

6. Lebendfalle gemäß einem der vorhergehenden Ansprüche, **dadurch gekennzeichnet, dass** der trichterförmige Einsatz (1) mit dem Fangbehälter (2), insbesondere an einem in der Gebrauchsstellung nach oben weisenden Rand (22) der äußeren Umfangsfläche (21) des Fangbehälters (2), durch eine Steckverbindung, Rastverbindung, Schraubverbindung oder Bajonettverbindung verbunden ist.

7. Lebendfalle gemäß einem der vorhergehenden Ansprüche, **dadurch gekennzeichnet, dass** der Sockel (3) mit dem Fangbehälter (2), insbesondere an einem in der Gebrauchsstellung nach unten weisenden Rand (23) der äußeren Umfangsfläche (21) des Fangbehälters (2), durch eine Steckverbindung, Rastverbindung, Schraubverbindung oder Bajonettverbindung verbunden ist.

8. Lebendfalle gemäß den Ansprüchen 6 und 7, **dadurch gekennzeichnet, dass** die Verbindung des trichterförmigen Einsatzes (1) mit dem Fangbehälter (2) und die Verbindung des Sockels (3) mit dem Fangbehälter (2) identisch ausgebildet sind.

9. Lebendfalle gemäß einem der vorhergehenden Ansprüche, **dadurch gekennzeichnet, dass** der Fangbehälter (2) bezüglich einer in der Gebrauchsstellung horizontal verlaufenden Achse drehsymmetrisch ausgebildet ist.

10. Lebendfalle gemäß einem der vorhergehenden Ansprüche, **dadurch gekennzeichnet, dass** der Fangbehälter (2), der trichterförmige Einsatz (1) und der Sockel (3) nicht alle aus dem gleichen Material hergestellt sind, insbesondere, dass der Fangbehälter (2) und der trichterförmige Einsatz (1) aus Kunststoff und der Sockel (3) aus Karton hergestellt sind.

11. Lebendfalle gemäß einem der vorhergehenden Ansprüche, **dadurch gekennzeichnet, dass** der Sockel (3) aus einem einzigen, zugeschnittenen und gefalteten Blatt Karton hergestellt ist und die Form einer Schachtel hat.

## Claims

1. Live trap for catching living insects, particularly fruit flies, comprising a catch container (2), a base (3) and a funnel-shaped insert (1) having a funnel entry opening (11), a funnel tip (12) disposed opposite the funnel entry opening (11) with respect to a longitudinal axis of the funnel-shaped insert (1), a funnel wall (14) with a plurality of slits (15) connecting the funnel entry opening (11) to the funnel tip (12) and tapering from the funnel entry opening (11) to the funnel tip (12), and a funnel exit opening (13) arranged at the funnel tip (12), wherein the funnel-shaped insert (1) is inserted into an upper opening (26) of the catch container (2) pointing upward in the operational position, in such a way that the funnel entry opening (11) points upward and the funnel tip (12) points downward in the operational position, wherein the catch container (2) has an outer peripheral wall (21), wherein the catch container (2) stands on or in the base (3) in the operational position, and wherein the live trap has an attractant container (4) which is at least partly arranged in the catch container (2) and/or at least partly in the base (3) and has a liquid attractant and a wick (43),
**characterized in that**
the outer peripheral wall (21) of the catch container (2) further has a lower opening (27) which points downward in the operational position, wherein both releasing the captured insects and replacing the attractant container (4) can be done from below through the lower opening (27).

2. Live trap according to claim 1, **characterized in that** the attractant container (4) is arranged partially in the catch container (2) and partially in the base (3).

3. Live trap according to one of the preceding claims, **characterized in that** the base (3) has a depression and a raised floor in the depression and that the attractant container (4) sits on the bottom of the depression and the catch container (2) sits on the raised floor.

4. Live trap according to one of the preceding claims, **characterized in that** the outer peripheral wall (21) of the catch container (2) is substantially cylindrical or conical and a longitudinal axis of the catch container (2) is arranged substantially vertically in the operational position.

5. Live trap according to one of the preceding claims, **characterized in that** in the operational position, the surface area of the funnel entry opening (11) amounts to substantially at least 50%, preferably at least 70%, further preferably at least 80% of the surface area of the largest horizontal cross section of the inner surface of the outer peripheral wall (21) of the catch container (2) within the vertical extension of the catch container (2).

6. Live trap according to one of the preceding claims, **characterized in that** the funnel-shaped insert (1) is connected to the catch container (2), in particular at an edge (22) of the outer peripheral surface (21) of the catch container (2) pointing upward in the operational position, by means of a plug connection, latching connection, screw connection or bayonet connection.

7. Live trap according to one of the preceding claims, **characterized in that** the base (3) is connected to the catch container (2), in particular at an edge (23) of the outer peripheral surface (21) of the catch container (2) pointing downward in the operational position, by means of a plug connection, latching connection, screw connection or bayonet connection.

8. Live trap according to claims 6 and 7, **characterized in that** the connection of the funnel-shaped insert (1) to the catch container (2) and the connection of the base (3) to the catch container (2) are designed identically.

9. Live trap according to one of the preceding claims, **characterized in that** the catch container (2) is designed discretely rotationally symmetrically with respect to an axis running horizontally in the operational position.

10. Live trap according to one of the preceding claims, **characterized in that** the catch container (2), the funnel-shaped insert (1) and the base (3) are not all made of the same material, in particular that the catch container (2) and the funnel-shaped insert (1) are made of plastic and the base (3) is made of cardboard.

11. Live trap according to one of the preceding claims, **characterized in that** the base (3) is produced from a single cut and folded sheet of cardboard and has the shape of a box.

## Revendications

1. Piège vivant pour la capture d'insectes vivants, en particulier de mouches des fruits, présentant un récipient de capture (2), un socle (3) et un insert en forme d'entonnoir (1) avec une ouverture d'entrée d'entonnoir (11), une pointe d'entonnoir (12) opposée à l'ouverture d'entrée d'entonnoir (11) par rapport à un axe longitudinal de l'insert en forme d'entonnoir (1), une paroi d'entonnoir (14) reliant l'ouverture d'entrée d'entonnoir (11) à la pointe d'entonnoir (12) et se rétrécissant depuis l'ouverture d'entrée d'entonnoir (11) en allant vers la pointe d'entonnoir (12) et avec une pluralité de fentes (15), et une ouverture de sortie d'entonnoir (13) agencée contre la pointe d'entonnoir (12), dans lequel l'insert en forme d'entonnoir (1) est inséré dans une ouverture supérieure (26), du récipient de capture (2), orientée vers le haut dans la position d'utilisation de sorte que, dans la position d'utilisation, l'ouverture d'entrée d'entonnoir (11) s'oriente vers le haut et la pointe d'entonnoir (12) s'oriente vers le bas, dans lequel le récipient de capture (2) présente une paroi périphérique extérieure (21), dans lequel dans la position d'utilisation le récipient de capture (2) se trouve sur ou dans le socle (3) et dans lequel le piège vivant présente un récipient à appât (4) agencé au moins partiellement dans le récipient de capture (2) et/ou au moins partiellement dans le socle (3) avec un liquide d'appât et une mèche (43),
**caractérisé en ce que**
la paroi périphérique extérieure (21) du récipient de capture (2) présente en outre une ouverture inférieure (27) orientée vers le bas dans la position d'utilisation, dans lequel tant une libération des insectes capturés qu'un remplacement du récipient d'appât (4) peuvent être effectués depuis le bas à travers l'ouverture inférieure (27).

2. Piège vivant selon la revendication 1, **caractérisé en ce que** le récipient d'appât (4) est agencé partiellement dans le récipient de capture (2) et partiellement dans le socle (3).

3. Piège vivant selon l'une des revendications précédentes, **caractérisé en ce que** le socle (3) présente un renfoncement et un fond intermédiaire dans le renfoncement, et **en ce que** le récipient d'appât (4) se trouve sur le fond du renfoncement et le récipient de capture (2) se trouve sur le fond intermédiaire.

4. Piège vivant selon l'une des revendications précédentes, **caractérisé en ce que** la paroi périphérique extérieure (21) du récipient de capture (2) est essentiellement cylindrique ou conique et un axe longitudinal du récipient de capture (2) est agencé essentiellement à la verticale dans la position d'utilisation.

5. Piège vivant selon l'une des revendications précédentes, **caractérisé en ce que** dans la position d'utilisation l'aire de l'ouverture d'entrée d'entonnoir (11) est essentiellement inférieure à 50 %, de préférence inférieure à 70 %, davantage de préférence inférieure à 80 % de l'aire de la plus grande section horizontale du côté intérieur de la paroi périphérique extérieure (21) du récipient de capture (2), laquelle apparaît à l'intérieur de l'extension verticale du récipient de capture (2).

6. Piège vivant selon l'une des revendications précédentes, **caractérisé en ce que** l'insert en forme d'entonnoir (1) est relié au récipient de capture (2), en particulier au niveau d'un bord (22), orienté vers le haut en position d'utilisation, de la surface périphérique extérieure (21) du récipient de capture (2), par une liaison d'enfichage, une liaison d'encliquetage, une liaison de vissage ou une liaison à baïonnette.

7. Piège vivant selon l'une des revendications précédentes, **caractérisé en ce que** le socle (3) est relié au récipient de capture (2), en particulier au niveau d'un bord (23), orienté vers le bas en position d'utilisation, de la surface périphérique extérieure (21) du récipient de capture (2), par une liaison d'enfichage, une liaison d'encliquetage, une liaison de vissage ou une liaison à baïonnette.

8. Piège vivant selon les revendications 6 et 7, **caractérisé en ce que** la liaison de l'insert en forme d'entonnoir (1) avec le récipient de capture (2) et la liaison du socle (3) avec le récipient de capture (2) sont conçus de façon identique.

9. Piège vivant selon l'une des revendications précédentes, **caractérisé en ce que** le récipient de capture (2) est conçu de façon symétrique en rotation par rapport à un axe se déroulant à l'horizontale dans la position d'utilisation.

10. Piège vivant selon l'une des revendications précédentes, **caractérisé en ce que** le récipient de capture (2), l'insert en forme d'entonnoir (1) et le socle (3) ne sont pas tous fabriqués à partir du même matériau, en particulier **en ce que** le récipient de capture (2) et l'insert en forme d'entonnoir (1) sont fabriqués à partir de matière plastique et le socle (3) est fabriqué à partir de carton.

11. Piège vivant selon l'une des revendications précédentes, **caractérisé en ce que** le socle (3) est fabriqué à partir d'une unique feuille de carton découpée et pliée, et présente la forme d'une boîte.
